# EUROPEAN PATENT SPECIFICATION

(11) **EP 0 879 000 B1**
(45) Date of publication and mention of the grant of the patent: **07.11.2001**
(21) Application number: 97904211.6
(22) Date of filing: 05.02.1997
(51) Int. Cl.: A41B 13/10, B32B 5/24

(54) **DISPOSABLE BIB HAVING FILAMENTARY REINFORCING LAYER**
WEGWERFLATZ MIT FASERFÖRMIGER VERSTÄRKUNGSEINLAGE
BAVETTE JETABLE POURVUE D'UNE COUCHE DE RENFORCEMENT FILAMENTEUSE

(30) Priority: 09.02.1996 US 599208
(43) Date of publication of application: 25.11.1998
(73) Proprietor: THE PROCTER & GAMBLE COMPANY, Cincinnati, Ohio 45202 (US)
(72) Inventor: REINHART, Richard, Nicholas, Jr., Cincinnati, OH 45231 (US)
(74) Representative: Canonici, Jean-Jacques
(86) International application number: US9701750
(87) International publication number: WO9728707

(56) References cited:
- WO-A-96/20613
- CA-A- 1 300 314
- GB-A- 2 091 083

## Description

### FIELD OF THE INVENTION

The present invention is related to disposable bibs, and more particularly. to a tear resistant disposable bib having filamentary reinforcing layer.

### BACKGROUND OF THE INVENTION

Disposable bibs are well known in the art. Such bibs can be provided for use on. for example, babies being fed. Disposable bibs can have a laminate construction comprising multiple layers. For instance, disposable bibs can include an absorbent paper topsheet for receiving spilled food material and a plastic film backsheet for preventing penetration of spilled liquids through the bib and onto the baby's clothing.

The art also discloses bibs having three layers, such as a layer of thermoplastic material between two layers of paper. Other bib designs shown in the art include bibs having a multi-layer construction, including a gauze decorative layer, as well as bibs having a front panel formed from plastic film to have grooves and apertures for catching and holding food. The art also teaches that it is known to cover a paper bib with an open net or reticulated material so that the paper is held together.

The following references illustrate various bib constructions: U.S. Patent 3.286.279 issued April 1, 1964 to Brown; U.S. Patent 3.329.969 issued July 15, 1965 to Farber et al.; U.S. Patent 3.608.092 issued September 28, 1971 to Taranto; U.S. Patent 3,979,776 issued September 14, 1976 to Gruenwald; U.S. Patent 4,416,025 issued November 22, 1983 to Moret et al.; U.S. Patent 4,441,212 issued to Ahr; U.S. Patent 4,445,231 issued May 1, 1984 to Noel; U.S. Patent 4,884,299 issued December 5, 1989 to Rose; UK patent application GB-A-2 148 700; and PCT patent publication WO 96/20613 (prior art under Art. 54(3) EPC).

One problem with known disposable bibs having a paper and plastic layer construction is that babies can tear off pieces of the bib. Tearing of the bib is undesirable because it reduces effective coverage of the baby's clothes, and also creates added pieces of waste requiring disposal.

Attempting to prevent tearing of the bib by design of the plastic film forming the waterproof backsheet, alone, is generally not satisfactory. Such plastic films generally have an inherent tradeoff of strength and flexibility. For example, stronger polymers tend to be less flexible while strength gained by increased thickness also compromises flexibility.

Alternatively, adding a protective layer to the back, garment facing surface of the bib does not provide the desired support to the paper topsheet. Adding a protective layer on the outer front surface of the bib does not provide support to the plastic backsheet, can affect the aesthetics of the outer front surface of the bib, and also can interfere with absorption of liquid spills on the outer front surface of the bib.

Accordingly, it is an object of the present invention to provide a disposable bib which resists tearing without detrimentally impairing either absorption, aesthetics, or flexibility of the bib.

Another object of the present invention is to provide a disposable bib having a multi-layer construction.

Yet another object of the present invention is to provide a disposable bib having a reinforcing layer, which can be disposed intermediate a paper topsheet and a plastic film backsheet, and which can be joined to one or both of the topsheet and the backsheet.

Yet another object of the present invention is to provide a disposable bib having an absorbent paper topsheet, a plastic film backsheet, and a filamentary reinforcing disposed intermediate layer, wherein the reinforcing layer can have a greater tensile strength than at least one of the topsheet or the backsheet layers to carry pulling loads exerted by the wearer, and wherein the openings in the reinforcing layer are sized to prevent the wearer from tearing off discrete pieces of the topsheet.

### SUMMARY OF THE INVENTION

The present invention provides a disposable bib having a composite construction comprising an have a absorbent, liquid permeable outer topsheet; a garment facing backsheet layer, the backsheet layer being liquid impermeable relative to the topsheet; and a load carrying filamentary reinforcing layer which can be disposed intermediate the backsheet and the topsheet. In one embodiment, the filamentary reinforcing layer is positioned subjacent the topsheet, and is joined to oppositely facing surfaces of the topsheet and the backsheet layers.

In one embodiment, the bib according to the present invention can have a tensile strength of at least about 2500 grams/inch, more preferably at least about 2500 grams/inch, and most preferably at least about 3000 grams/inch. The bib can have a flexural rigidity of less than about 20 gram-cm, more preferably less than about 15 gram-cm, and most preferably less than about 12 gram-cm. Accordingly. a bib according to the present invention can have a relatively high tensile strength with a relatively low level of flexural rigidity, as characterized by the strength to flexibility ratio which can be greater than about 150, and more particularly, greater than about 300 for bibs according to one embodiment of the present invention.

The filamentary reinforcing layer comprises a web of natural or synthetic fibers. The nonwoven web of fibers can comprise a nonwoven web of spunlaid, thermally bonded polyolefinic fibers having a basis weight of between about 5 to about 30 gram/square meter.

### BRIEF DESCRIPTION OF THE DRA WINGS

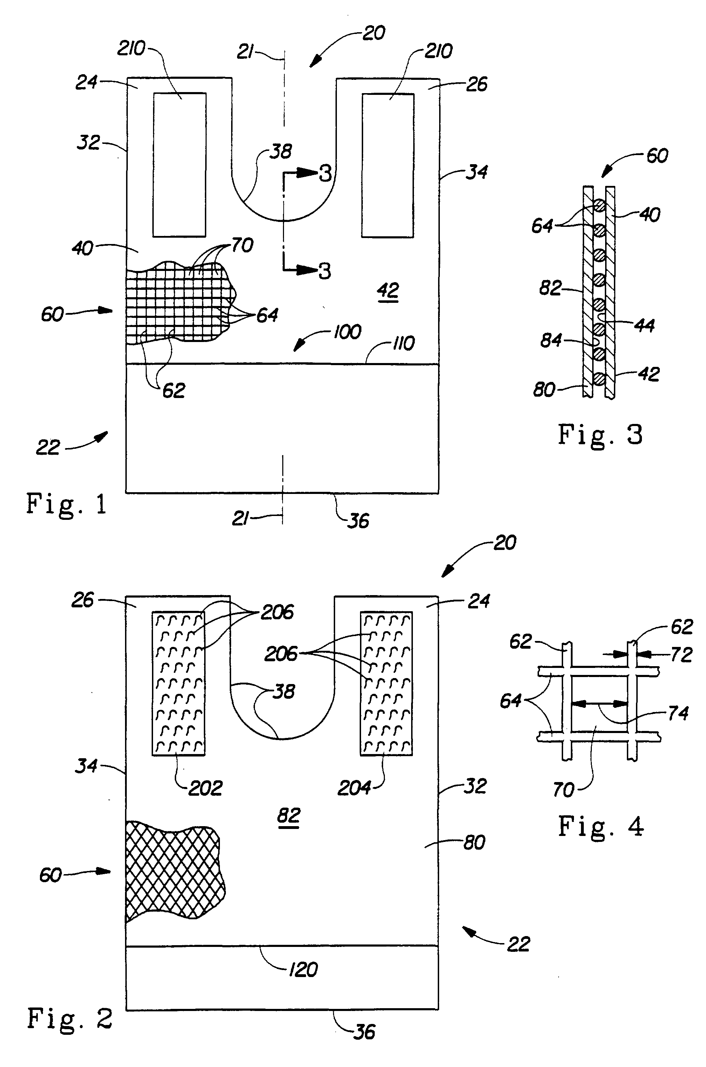

While the specification concludes with claims particularly pointing out and distinctly claiming the present invention, the invention will be better understood from the following description taken in conjunction with the accompanying drawings in which like designations are used to designate substantially identical elements. Figure 1 and 2 do not show disposable bibs according to the present claimed invention.
Figure 1 is a front plan view of the disposable bib with a portion of the topsheet cut away to show a reinforcing filamentary network disposed between the topsheet and the backsheet, wherein the filaments of the filamentary network extend generally longitudinally and laterally.
Figure 2 is a rear plan view of a disposable bib with a portion of the backsheet cut away to show a reinforcing filamentary network disposed between the topsheet and the backsheet, wherein the filaments of the filamentary network extend generally diagonally with respect to the longitudinal direction.
Figure 3 is a partial cross-sectional view taken along lines 3-3 in Figure 1, and showing the filamentary network disposed between the topsheet and the backsheet.
Figure 4 is an enlarged schematic illustration of a portion of the filamentary network.
Figure 5 is an in use perspective view of a disposable bib.
Figure 6 is a front plan view of a bib according to the present invention, the bib shown partially cut away and having a filamentary reinforcing layer comprising a nonwoven web positioned between the topsheet and the backsheet, with the nonwoven web positioned subjacent the topsheet.
Figure 7 is a cross-sectional illustration taken along lines 7-7 of Figure 6.
Figure 8 is a cross-sectional view showing a bib having a nonwoven web joined to an outwardly facing surface of the backsheet.

### DETAILED DESCRIPTION OF THE INVENTION

The bib 20 includes a bib body 22 and a pair of shoulder extensions 24 and 26 extending from the bib body 22 on either side of a bib longitudinal centerline 21. The term "longitudinal" refers to a direction or axis which is generally parallel to a line extending from the wearer's head to the wearer's waist as the bib is worn. The term "lateral" refers to a direction or axis which is perpendicular to the longitudinal direction and which is generally parallel to a line extending across the wearer's chest as the bib is worn.

The bib 20 has a periphery which can include two generally longitudinally extending side edges 32 and 34, a generally laterally extending bottom edge 36, and a neck opening 38. The neck opening 38 is disposed intermediate the shoulder extensions 24 and 26, and accommodates the wearer's neck as the bib is worn. The neck opening 38 is a generally U-shaped opening in Figure 1, but it will be understood that other neck opening configurations, including various open and closed shapes, could be used. The following U.S. Patents are incorporated herein by reference for purpose of showing various bib shapes: U.S. Patent 4,416,025 issued November 22, 1983 to Moret et al.; U.S. Patent 4,441,212 issued to Ahr; and U.S. Patent 4,445,231 issued May 1, 1984 to Noel.

The bib 20 according to the present invention comprises a composite construction having multiple laminae. In the Figures 1-5, the bib comprises an absorbent, liquid permeable outer topsheet layer 40, a garment facing backsheet layer 80 which is liquid impermeable relative to the topsheet 40, and a load carrying filamentary reinforcing layer, such as a filamentary network 60 disposed intermediate the backsheet layer 80 and the topsheet layer 40. The topsheet 40 has a first outer surface 42 for receiving spilled food material, and a second inner surface 44. The backsheet 80 has a first garment facing surface 82 and a second surface 84. The surface 84 of the backsheet 80 and the surface 44 of the topsheet 40 are oppositely facing surfaces. The filamentary network 60 can have a plurality of openings 70 extending there through, and can be joined to oppositely facing surfaces 44 and 84 of the topsheet 40 and backsheet 80.

The filamentary network 60 can have tensile strength and tensile elongation properties which permit it to carry loads exerted on the bib 20, thereby imparting tear resistance to the bib 20. In one embodiment the filamentary network 60 comprises a polymeric net comprising a first plurality of generally parallel filaments 62 and a second plurality of generally parallel filaments 64. The filaments 62 can extend generally longitudinally, and the filaments 64 can extend generally laterally, as shown in Figure 1. However, it will be understood that the filaments 62 and 64 need not extend longitudinally and laterally, nor be generally parallel or mutually perpendicular. For example, in the embodiment shown in Figure 2, the filaments 62 and 64 can extend diagonally with respect to the longitudinal axis 21, and can form an angle of about 45 degrees with the axis 21.

The disposable bib 20 can optionally have a pocket 100 for catching and receiving food particles. The pocket 100 can have an open edge 110 and a bottom edge 120 (Figure 2). U.S. Patent 4,445,231, listed above, is incorporated herein by reference for the purpose of teaching suitable constructions for pocket 100.

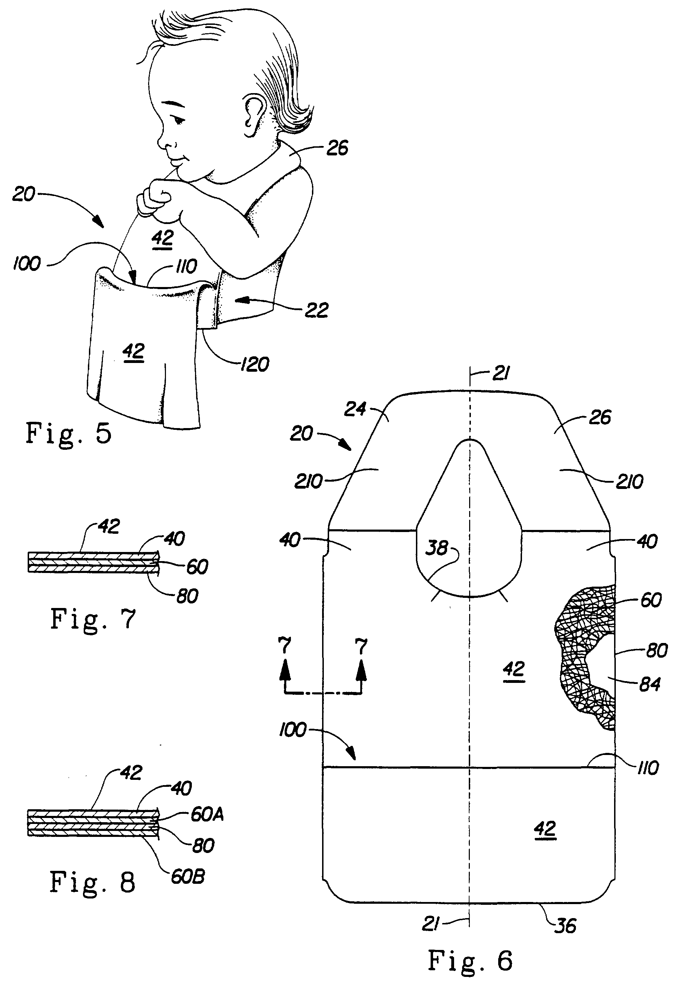

The bib 20 can also have a fastening assembly for holding the bib 20 in place on the wearer. Figure 5 shows the bib 20 held in place on a wearer. In Figures 1 and 2, the fastening assembly includes fastening members 202 and 204 disposed on the garment facing surface 82 of the backsheet 80. The fastening members 202 and 204 are positioned on the shoulder extensions 24 and 26, and can comprise a plurality of fabric engaging projections 206, which can be in the shape of a prong or hook. The projections 206 extend from the plane of the bib 20. In one embodiment, the projections 206 on each of the shoulder extensions 24 and 26 can engage the fabric of the wearer's garment to hold the bib 20 in place.

In another embodiment, the bib can also include one or more landing surfaces 210 engageable by the projections 206. A landing surface 210, which can comprise a non-woven fabric, is joined to the outer surface 42 of the topsheet 40, and positioned on the shoulder extension 24. To secure the bib to the wearer, the shoulder extension 26 is positioned to overlap the shoulder extension 24 behind the wearer's neck, with the projections 206 on the fastening member 202 engaging the landing surface 210. Suitable fastening members 202 and 204 are manufactured by the 3M Company of Minnesota under the designation MC-6, Code KN0513/KN0514. A suitable landing surface 210 is a nonwoven web of polypropylene fibers manufactured by the Veratec Division of the International Paper Corporation of Walpole, Massachusetts under the designation P-14, Supplier Grade #9324369. Another suitable landing surface 210 is a nonwoven web of spunlaid, thermally point bonded polypropylene fibers, the web having a basis weight of about 22 grams per square meter and the fibers having an average denier of less than about 3.0 grams per 9000 meter of fiber length, the web manufactured by Fiberweb Corp. of Simpsonville S.C. under the designation Celestra Unicorn.

Suitable hook and loop type fasteners are also available from VELCRO USA of New Hampshire. Other suitable fastening members having projections are disclosed in the following U.S. Patents, which are incorporated herein by reference: U.S. Patent 4,846,815 issued July 11, 1989 to Scripps; 4,894,060 issued January 16. 1990 to Nestegard; 4,946,527 issued August 7, 1990 to Battrell; 5,019,065 issued May 28, 1991 to Scripps; 5,058,247 issued October 22, 1991 to Thomas et al.; 5,116,563 issued May 26, 1992 to Thomas et al.; 5,180,534 issued January 19, 1993 to Thomas et al.; 5,318,741 issued June 7, 1994 to Thomas; 5,325,569 issued July 5, 1994 to Goulait et al.; and 5,326,415 issued July 5, 1994 to Thomas et al. Alternatively, ties, tape, or other adhesive fasteners can be used to secure the bib to the wearer.

Examining the laminar construction of the bib 20 in more detail, the topsheet 40 can comprise a paper web having a basis weight of from about 10 to about 50 pounds per three thousand square feet. The following U.S. Patents are incorporated by reference for the purpose of disclosing how to make tissue paper suitable for use in making a topsheet 40: U.S. Patents 4,191,609; 4,440,597; 4,529,480; 4,637,859; 5,223,096; and 5,240,562. A suitable topsheet 40 can be formed from a single ply or multiple ply paper towel, such as a two ply Bounty Paper Towel manufactured by The Procter and Gamble Company of Cincinnati, Ohio.

The backsheet 80 can comprise a liquid impervious film. In on embodiment the backsheet 80 can comprise a polyethylene film having a thickness of between about 0.0076 millimeter and about 0.0508 millimeter. Suitable polyethylene films can comprise various mixtures of low density polyethylene and linear low density polyethylene. A polyethylene film from which the backsheet 80 can be formed is manufactured by Tredegar Industries of Terre Haute, Indiana. Suitable materials from which backsheet 80 can be formed include films available as Tredegar CPC-2 and Tredegar HTS-5. Another suitable film is 1.5 Clopay 1401 film manufactured by Clopay Corp.

The filamentary network 60 can be joined to the surfaces 44 and 84 of the topsheet 40 and the backsheet 80 by any suitable means, including but not limited to mechanical bonding, adhesive bonding, and ultrasonic bonding. The filamentary network 60 is preferably joined to the surfaces 44 and 84 along substantially the entire longitudinal length and across substantially the entire lateral width of the bib 20. A suitable adhesive for joining the filamentary network 60 to the topsheet 40 and the backsheet 80 is a hot melt adhesive such as Findley Adhesive H2031 available from Findley Adhesives of Elmgrove, Wisconsin. About 3 milligrams of the H2031 adhesive per square inch of bib area can be used to join the filamentary network 60 to the topsheet 40 and the backsheet 80.

In one embodiment, the adhesive can be applied to either a surface of the filamentary network 60, or to the surface 44 of the topsheet, such that at least some portions of the surface 44 of the topsheet are not coated by adhesive when the filamentary network 60 and the surface 44 are joined together. Accordingly. any detrimental affect of the adhesive on the absorbency of the topsheet can be reduced.

For instance, the adhesive can be applied to the filaments of filamentary network 60 such that only those filaments contacting the surface 44 coat the surface 44 with adhesive. Alternately, the surface 44 or a surface of the filamentary network 60 can be coated with a discrete or continuous patterned layer of adhesive, such as in the form of (but not limited to) dots, grids, spirals or swirls.

The filamentary network 60 increases the tensile strength of the bib 20, to thereby provide the bib with tear resistance. The filamentary network 60 can have a maximum tensile strength (the tensile strength measured in the direction along which the tensile strength of the filamentary network 60 is maximum) greater than that of either the of topsheet 40 or the backsheet 80. The tensile strength can be measured using a constant rate of elongation tensile test machine, as described below.

The filamentary network 60 can be formed from different materials, including natural fibers, synthetic fibers, and combinations thereof. For instance, the filamentary network 60 can be formed from a number of different polymeric materials, to provide the bib with different strength, elongation, and flexibility properties. Generally, higher levels of strength result in lower levels of flexibility.

The openings 70 between adjacent filaments of the filamentary network 60 are sized to prevent infant wearers from grasping unreinforced areas of the topsheet 40 overlying the openings 70 and tearing such unreinforced areas of the topsheet 40 from the bib. For instance, if the filamentary reinforcing layer comprises a polymeric net, the openings 70 preferably can be sized to be smaller than the fingertip of a wearer to prevent the wearer from poking a finger through the topsheet 40. Accordingly, when the filamentary reinforcing layer 60 comprises a polymeric net, the openings 70 can have a maximum width 74 (Figure 4) of no more than about 2 centimeters. In one preferred embodiment, the openings 70 can have a maximum width 74 which is no more than about 1 cm, preferably no more than about 0.5 cm, and most preferably no more than about 0.25 cm.

The filamentary reinforcing layer preferably provides tear resistance without substantially increasing the stiffness of the bib 20, without substantially affecting the ability of the topsheet 40 to absorb spilled food material, and without substantially increasing the amount of material required to construct the bib.

The stiffness of a sheet generally increases as the cube of the sheet thickness (stiffness proportional to the cube of the sheet thickness, t), while the tensile strength increases generally linearly with sheet thickness (tensile strength propertional to t). The present invention can provide bibs having an increased tensile strength without the accompanying substantial increase in stiffness associated with increasing the thickness of one of the bib components (e.g. the backsheet 80).

Some materials, such as thermoplastic materials, exhibit both relatively high stength and relatively high flexibility. Accordingly, for bibs according to the present invention having a filamentary layer comprising a polymeric net, and for the range of width 74 listed above, the filaments can have a relatively small cross-sectional dimension 72 (Figure 4). For instance. the cross-sectional dimension 72 can be less than about 2 mm, and in one embodiment, the cross-sectional dimension 72 can be less than about .25 mm, thereby providing the filamentary network 60 with a relatively large open area ratio. The open area ratio increases with increasing spacing between adjacent filaments, and the open area ratio decreases as the cross-sectional dimension 72 of the filaments increases.

The filamentary network 60 comprises a nonwoven of thermoplastic material. wherein the thermoplastic material is selected from a group including polyethylene, polypropylene, polyvinyl chloride, polyvinyl acetate, nylon, polyesters, polyethylene vinyl acetate, polyethylene methyl methacrylate, polyethylene acrylic acid, polypropylene methylmethacrylate, polypropylene acrylic, acid, polyvinyliliene chloride, polyvinyl alcohol, cellulose acetate, cellulose butyrate, polycarbonates, and alkyd cellulosics, wherein the aforementioned thermoplastic polymers are considered to be illustrative but not limiting.

The bib has an absorbent filamentary reinforcing layer in the form of a filamentary network 60 comprising a nonwoven web of polyolefinic fibers having a basis weight of between about 5-30 grams/square meter. For instance, a suitable nonwoven web can comprise spunlaid, thermally point bonded polypropylene fibers. The web can have a basis weight of about 22 grams per square meter, and the fibers forming the web can have an average denier of less than about 3.0 grams per 9000 meter of fiber length. A suitable nonwoven web from which the filamentary network 60 can be formed is manufactured by the Fiberweb Corp. of Simpsonville, S.C. under the designation Celestra Unicorn. Figure 6 is a partially cutaway front plan view of a disposable bib 20 having a filamentary network 60 in the form of a nonwoven web. the nonwoven web disposed between the topsheet 40 and the backsheet 80. In Figure 6, a portion of the topsheet 40 is cut away to show a portion of the underlying nonwoven web positioned subjacent the topsheet 40. A portion of the nonwoven web is cutaway to show a portion of the underlying backsheet 80. Figure 7 is a cross-sectional view taken along lines 7-7 in Figure 6 and showing the filamentary network 60 comprising a nonowoven web disposed between the topsheet 40 and the backsheet 80.

Figure 8 shows a bib having a first filamentary network 60A comprising a nonwoven web which is disposed between the topsheet 40 and the plastic film layer 80, and a second filamentary network 60B comprising a nonwoven web joined to the plastic film layer 80. The first and second filamentary networks 60A and 60B can be of similar or different constructions. For instance, the filamentary networks 60A and 60B can each comprise a nonwoven web of spunlaid, thermally point bonded polypropylene fibers having a basis weight of about 22 grams per square meter. The filamentary network 60B can be joined adhesively or otherwise to the plastic film layer 80, and provides a soft, clothlike feel to the garment facing side of the bib 20.

In yet another embodiment, the bib 20 can have three three layers, the three layers comprising the topsheet 40, the plastic film layer 80 postioned subjacent with and joined to the topsheet 40, and a filamentary network 60B joined to the plastic film layer 80 such that the film layer 80 is positioned between the filamentary network 60B and the topsheet 40. This alternative embodiment provides the benefit of strengthening the plastic film layer 80 without compromising absorption, aesthetics, or flexibility of the bib, but is less preferrable in that it does not directly provide strength reinforcement to the absorbent topsheet 40.

### TEST PROCEDURES

The following procedures are used to measure the tensile strength, flexural rigidity, and impact resistance of a sample of a base bib having a topsheet and backsheet. The same procedures are used to measured the comparable properties of a sample of a bib of the present invention having the same topsheet and backsheet construction as the base bib, but also incorporating a nylon net between the topsheet and backsheet, as shown in Figures 1-4. The topsheet comprises a Bounty brand paper towel, the backsheet comprises a polyethylene film having a thickness of about 0.025 mm. The filamentary network 60 comprises the nylon net described above available from Fabri-Centers of America as SKU 040-1703. In both the base bib and the bib having the nylon net according to the present invention, about 3 milligrams of the H2031 adhesive per square inch of bib area is used between the topsheet and the backsheet to join the bib components together. In the bib having the nylon net according to the present invention, the filaments 62 and 64 are oriented diagonally at about a 45 degree angle to the longitudinal axis 21, as shown in Figure 2. Bib samples are conditioned at 50% RH and 73°F for at least 2 hours before testing.

### Tensile Test

The tensile strength of the bibs and of the filamentary network is measured with reference to the INDA standard test IST 110.1-92 of the Association of the Nonwoven Fabrics Industry, which standard is incorporated herein by reference. Bib samples are cut into 1.00 inch wide sample strips. The samples are placed squarely in the jaws of an Instron Model 4201 constant rate of elongation tensile tester. One inch. line-contact grips are used to avoid any sample slippage. The samples are pretensioned to zero load at a 1.0 inch gauge length. Force is measured with a 100 N load cell and recorded continuously as the sample is elongated at a crosshead speed of 12.0 inches per minute to complete failure. In all cases a local maxima occurs in the first inch of elongation. This initial peak is referred to as the tensile strength of the bib. This peak typically coincides with the failure of the topsheet or filamentary network, if present. In some cases, the load on the polyethylene film just before the polyethylene film breaks exceeds the initial peak. The strength values recorded are reported in grams per 1 inch wide strip (grams/inch) wherein 1 inch is 2,54 cm. Properties are reported as an average of at least two measurements.

Results of tensile testing of the base bib and the bib having a nylon net oriented as shown in Figure 2 are listed in Table 1. Properties are reported for samples cut from a bib such that the sample gauge length is generally perpendicular to the bib axis 21 (gauge length angled 45 degrees with respect to filaments in the bib having a nylon net), and also for samples cut to have a gauge length angled about 45 degrees with respect to with the bib axis 21 (gauge length aligned parallel and perpendicular to filaments in the bib having a nylon net).

The results in Table 1 show that the tensile strength of a laminate bib having a nylon net exceeds the tensile strength of the base bib. The laminate bib according to the present invention can have a tensile strength greater than about 2000 grams/inch, more particularly, greater than about 2500 grams/inch, and yet more particularly greater than about 3000 grams/inch.

### FLEXURAL RIGIDITY (Inversely proportional to flexibility)

The relative flexibility of samples of a base bib and samples of a bib according to the present invention are measured using INDA standard test IST 90.1 - 92 as reference, which standard test is incorporated by reference. This test measures the flexural rigidity of a sample in terms of drape stiffness. A sample measuring 2.54 cm by 20 cm is cut from the bib. With the topsheet side facing upward, the sample is slid manually at a rate of about 4.75 in per minute in a direction parallel to its long dimension, so that its leading edge projects from the edge of a horizontal platform surface. The length of the overhang of the sample is measured when the tip of the sample is depressed under its own weight to the point where the line joining the tip of the sample to the edge of the platform makes a 41.5 degree angle with the horizontal. The flexural rigidity of the sample is the cube of this overhang length multiplied by the basis weight of sample. The flexural rigidity is reported in gram-centimeters as an average of at least two measurements. The flexibility of the sample is inversely proportional to the reported flexural rigidity. Results of flexural rigidity testing of the base bib and a bib having a nylon net oriented as shown in Figure 2 are listed in Table 2. The flexural rigidity is reported for samples of the bib cut to have a long dimension generally perpendicular to the axis 21 of the bib and for samples of a bib cut to have a long dimension parallel to the axis 21.

The laminate bib according to the present invention can have a flexural rigidity which is less than about 20 g-cm, more particularly, less than about 15 gram-cm, and yet more particularly less than about 12 gram-cm. Accordingly, the laminate bib according to the present invention has relatively high tensile strength (for providing tear resistance) with a relatively low level of flexural rigidity (for providing softness and comfortable conformability of the bib to the wearer's body) compared to a bib which is strengthed by merely increasing the thickness of one of the bib components.

The bib strength to flexural rigidity ratio is calculated by dividing the tensile strength in gm/inch, as measured along a particular axis, by the flexural rigidity in gram-cm, as measured along the same axis.

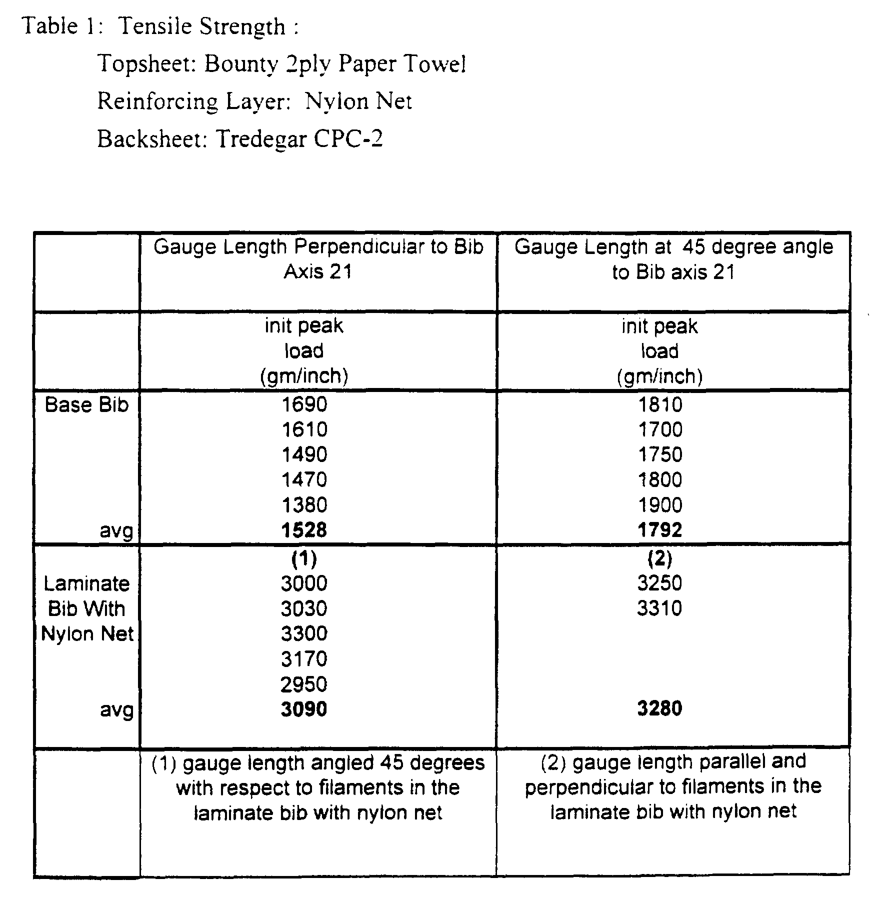

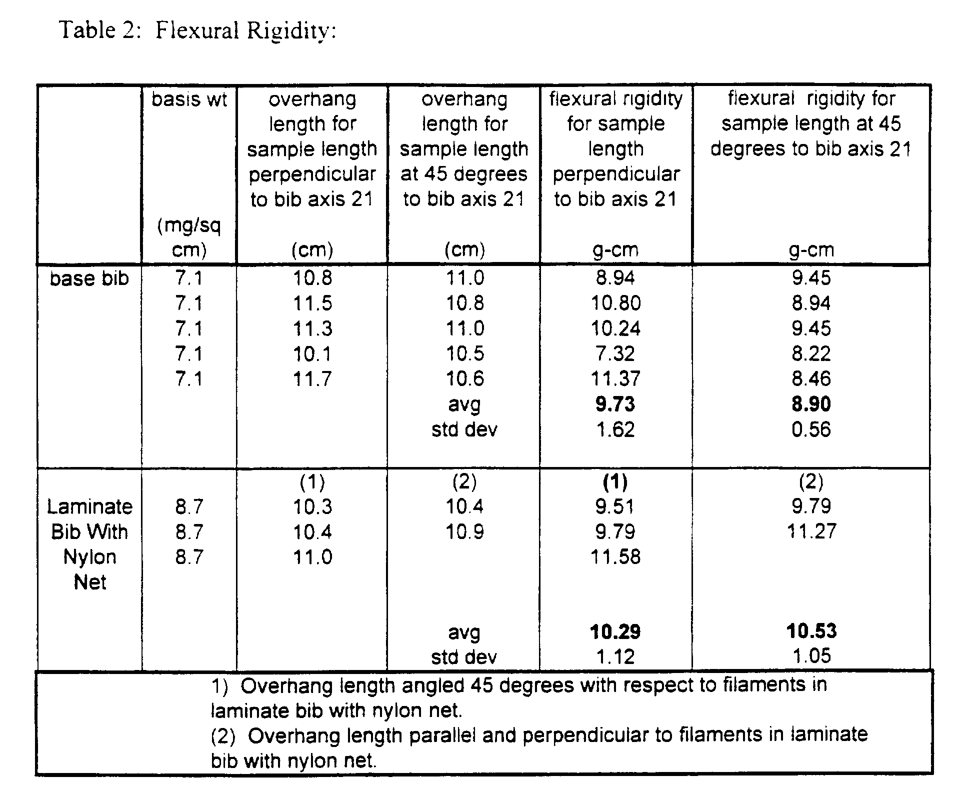

Table 3 provides tensile strength results for a bib according to the present invention having a filamentary reinforcing layer comprising a nonwoven web, as shown in Figure 6. The tensile strength values were measured as in Table 1, except that the tensile strengths were measured parallel and perpendicular to the bib axis 21. Table 4 provides flexural rigidity data for a bib according to the present invention having a filamentary reinforcing layer comprising a nonwoven web. The flexural rigidity values were measured as in Table 2, except that the flexural rigidities were measured parallel and perpendicular to the bib axis 21.

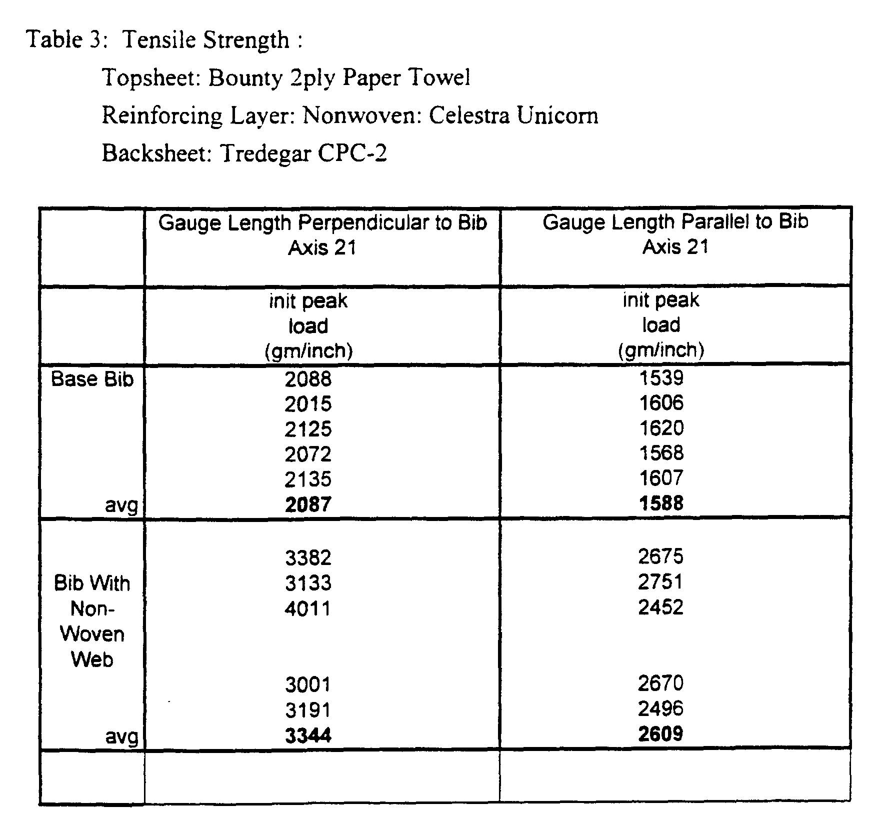

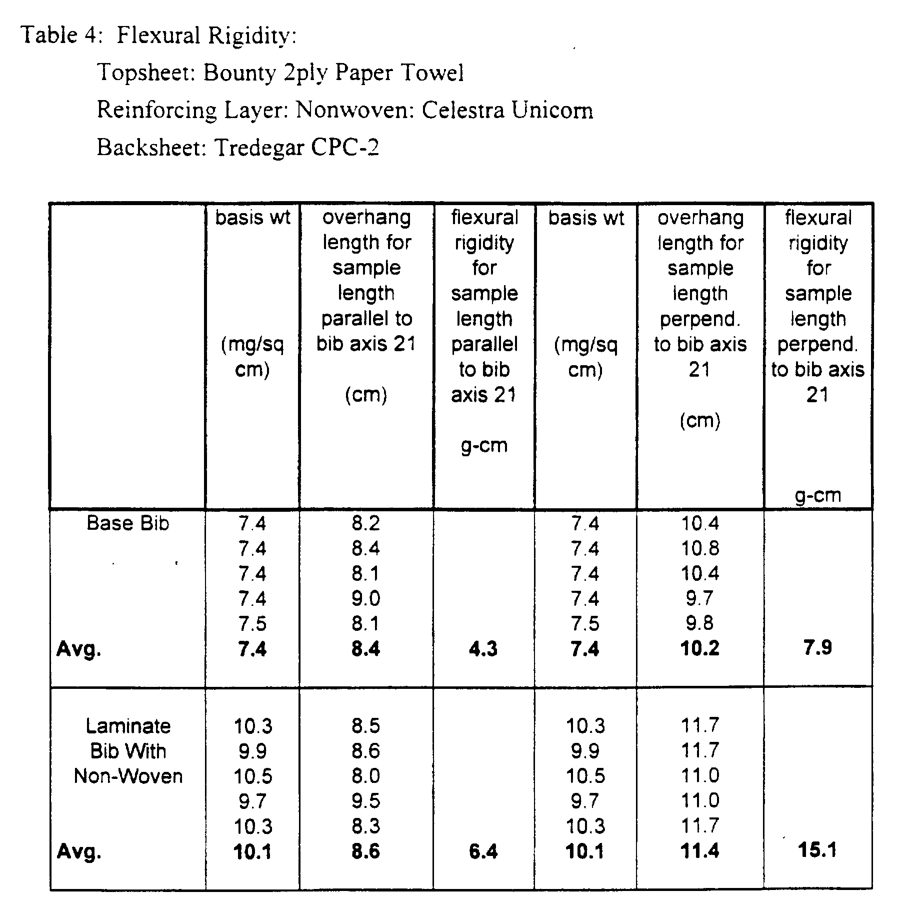

The results in Tables 3 and 4 illustrate that a bib according to the present invention having filamentary network comprising a nonwoven web can have a basis weight of less than about 20, and more preferably less than about 15 milligrams per square centimeter to provide a lightweight, comfortable fit. The bibs can have a tensile strength of at least about 2000 gm/inch, and more preferalby at least about 2500 gram/inch. Such a bib can also have a flexural rigidity of less than about 20 gm-cm. The tensile strength to flexural rigidity ratio as measured parallel to the axis 21 from tables 3 and 4 was about 400 (2609/6.4), and the tensile strength to flexural rigidity ratio as measured perpendicular to the axis 21 was about 221 (3344/15.1).

While particular embodiments of the present invention have been illustrated and described. it would be obvious to those skilled in the art that various other changes and modifications can be made without departing from the scope of the invention. It is intended to cover in the appended claims all such changes and modifications that are within the scope of the invention.

## Claims

1. A disposable bib (20) having multiple laminae, the disposable bib comprising:
an absorbent, liquid permeable outer topsheet (40),
a backsheet layer (80), the backsheet layer beine liquid impermeable relative to the topsheet; and
a filamentary reinforcing layer (60) disposed intermediate the backsheet and the topsheet, the filamentary reinforcing layer having a tensile strength greater than that of the topsheet layer,
**characterized in that**
the filamentary reinforcing layer comprises a nonwoven web having a basis weight of between about 5 to about 30 grams per square meter.

2. The disposable bib (20) of Claim 1 wherein the filamentary reinforcing layer (60) is positioned subjacent the topsheet (40).

3. The disposable bib (20) of Claims 1 or 2 wherein the filamentary reinforcing layer (60) is joined to a surface of the topsheet (40).

4. The disposable bib (20) of Claims 1, 2 or 3 wherein the filamentary reinforcing layer (60) comprises a web made from fibers selected from the group consisting of natural fibers, synthetic cellulosic fibers, synthetic modified cellulosic fibers, synthetic mineral fibers, and mixtures thereof.

5. The disposable bib (20) of Claims 1, 2, 3, or 4 wherein the filamentary reinforcing layer (60) comprises a nonwoven web of spunlaid, thermally bonded polyolefinic fibers having an average denier of less than about 4.0 grams per 9000 meter of fiber length.

6. The disposable bib (20) of Claims 1, 2, 3, 4, or 5 comprising a garment facing thermoplastic film backsheet (80) and a paper web topsheet layer (40).

7. The disposable bib (20) of Claims 1, 2, 3, 4, 5, or 6, wherein the bib has a basis weight of less than about 30 mg/square cm. and more preferably less than about 15 mg/square cm.

8. The disposable bib (20) of Claims 1, 2, 3, 4, 5, 6, or 7, wherein the disposable bib has a tensile strength greater than about 2500 grams per 2,54 cm (2500 grams/inch).

9. The disposable bib (20) of Claims 1, 2, 3, 4, 5, 6, 7, or 8, wherein the disposable bib has flexural rigidity of less than about 20 gm-cm. and wherein the disposable bib preferably has a flexural rigidity ratio of at least about 150.

## Patentansprüche

1. Wegwerfbarer Latz (20) mit mehreren Schichten, wobei der wegwerfbare Latz umfaßt:
eine absorbierende, flüssigkeitsdurchlässige äußere Decklage (40), eine rückseitige Schicht (80), wobei die rückseitige Schicht flüssigkeitsundurchlässig bezüglich der Decklage ausgebildet ist, und
eine fasrige Verstärkungslage (60), die zwischen der rückseitigen Schicht und der Decklage angeordnet ist, wobei die fasrige Verstärkungslage eine größere Zugfestigkeit als die Decklage aufweist,
**dadurch gekennzeichnet, daß** die fasrige Verstärkungslage eine Faservliesstofflage aufweist, die ein Flächengewicht zwischen ungefähr 5 bis ungefähr 30 g pro m² aufweist.

2. Wegwerfbarer Latz (20) nach Anspruch 1, wobei die fasrige Verstärkungslage (60) unter der Decklage (40) liegend angeordnet ist.

3. Wegwerfbarer Latz (20) nach Anspruch 1 oder 2, wobei die fasrige Verstärkungslage (60) mit einer Oberfläche der Decklage (40) verbunden ist.

4. Wegwerfbarer Latz (20) nach Anspruch 1, 2 oder 3, wobei die fasrige Verstärkungslage (60) eine Faserstoff-Lage aufweist, das aus Fasern hergestellt ist, die ausgewählt sind aus der Gruppe bestehend aus Naturfasern, synthetischen Zellstoff-Fasern, synthetisch-modifizierten Zellstoff-Fasern, synthetischen Mineralfasern und Mischungen davon.

5. Wegwerfbarer Latz (20) nach einem der Ansprüche 1, 2, 3 oder 4, wobei die fasrige Verstärkungslage (60) eine Faservlieslage aus spinngelegten, thermisch gebundenen Polydefinfasern aufweist, die ein Durchschnittsdenier von weniger als ungefähr 4 g pro 9000 m Faserlänge aufweisen.

6. Wegwerfbarer Latz (20) nach Anspruch 1, 2, 3, 4 oder 5, umfassend eine wäscheseitige, thermoplastische Rückseitenschicht (80) und eine Papierfaserstoff-Decklage (40).

7. Wegwerfbarer Latz (20) nach Anspruch 1, 2, 3, 4, 5 oder 6, wobei der Latz ein Flächengewicht von weniger als ungefähr 30 mg/cm² und bevorzugter von weniger als ungefähr 15 mg/cm² aufweist.

8. Wegwerfbarer Latz (20) nach Anspruch 1, 2, 3, 4, 5, 6 oder 7, wobei der wegwerfbare Latz eine Zugfestigkeit aufweist, die größer ist als 2500 g pro 2,54 cm (2500 g/inch).

9. Wegwerfbarer Latz (20) nach Anspruch 1, 2, 3, 4, 5, 6, 7 oder 8, wobei der wegwerfbare Latz eine Biegesteifigkeit von weniger als ungefähr 20 gm-cm aufweist, und wobei der wegwerfbare Latz vorzugsweise ein Biegesteifigkeitsverhältnis von mindestens ungefähr 150 aufweist.

## Revendications

1. Bavoir jetable (20) comportant plusieurs feuilles, le bavoir jetable comprenant :
une feuille de dessus (40) extérieure, absorbante, perméable aux liquides,
une couche de feuille de fond (80), la couche de feuille de fond étant imperméable aux liquides par rapport à la feuille de dessus, et
une feuille de renforcement filamenteuse (60) placée entre la feuille de fond et la feuille de dessus, la couche de renforcement filamenteuse ayant une résistance à la traction supérieure à celle de la couche de feuille de dessus,
**caractérisé en ce que**
la couche de renforcement filamenteuse comprend une nappe non tissée ayant un grammage compris entre environ 5 et environ 30 grammes par mètre carré.

2. Bavoir jetable (20) selon la revendication 1, dans lequel la couche de renforcement filamenteuse (60) est placée de façon à être sousjacente à la feuille de dessus (40).

3. Bavoir jetable (20) selon les revendications 1 ou 2, dans lequel la couche de renforcement filamenteuse (60) est réunie à une surface de la feuille de dessus (40).

4. Bavoir jetable (20) selon les revendications 1, 2 ou 3, dans lequel la couche de renforcement filamenteuse (60) comprend une nappe faite de fibres choisies parmi le groupe constitué de fibres naturelles, de fibres synthétiques cellulosiques, de fibres synthétiques modifiées cellulosiques, de fibres synthétiques minérales et des mélanges de celles-ci.

5. Bavoir jetable (20) selon les revendications 1, 2, 3 ou 4, dans lequel la couche de renforcement filamenteuse (60) comprend une nappe non tissée de fibres de polyoléfine appliquées par filage, reliées de manière thermique, ayant un denier moyen inférieur environ à 4,0 grammes par 9000 mètres de longueur de fibre.

6. Bavoir jetable (20) selon les revendications 1, 2, 3, 4 ou 5, comprenant une feuille de fond de film thermoplastique (80) faisant face au vêtement et une couche de feuille de dessus de nappe en papier (40).

7. Bavoir jetable (20) selon les revendications 1, 2, 3, 4, 5 ou 6, dans lequel le bavoir a un grammage inférieur environ à 30 mg/cm² et, mieux encore, inférieur environ à 15 mg/cm².

8. Bavoir jetable (20) selon les revendications 1, 2, 3, 4, 5, 6 ou 7, dans lequel le bavoir jetable a une résistance à la traction supérieure environ à 2500 g par 2,54 cm (2500 g/pouce).

9. Bavoir jetable (20) selon les revendications 1, 2, 3, 4, 5, 6, 7 ou 8, dans lequel le bavoir jetable a une rigidité à la flexion inférieure environ à 20 g-cm et dans lequel le bavoir jetable a, de préférence, un taux de rigidité à la flexion égal au moins environ à 150.
